# EUROPEAN PATENT APPLICATION

(11) **EP 4 531 000 A1**
(43) Date of publication of application: **02.04.2025**
(21) Application number: 23200637.9
(22) Date of filing: 28.09.2023
(51) Int. Cl.: G06V 10/82

(54) **METHOD FOR SEGMENTING AN IMAGE**

(71) Applicant: Robert Bosch GmbH, 70442 Stuttgart (DE)
(72) Inventor: Kozlovsky, Shir, 8548000 Haifa (IL); Joglekar, Omkar, 3508049 Haifa (IL)

(57) **Abstract**

According to various embodiments, a method for segmenting an image is described, comprising receiving a text prompt describing a type of object to be marked in the image, generating, by a text prompt encoder, embeddings of point prompts corresponding to the received text prompt and supplying the embeddings of the point prompts and the image to a segmentation network configured to perform image segmentation from point prompt embeddings.

## Description

The present disclosure relates to methods for segmenting an image.

Assembly, such as electrical wiring assembly, is one of the most common manual labour jobs in industry. Examples are electrical panel assembly and in-house switchgear assembly. Complicated assembly processes can typically be described as a sequence of four main activities: detection, reaching, grasping and insertion. Similar tasks occur for example in cable manufacturing which typically includes cable insertion for validation and verification.

For detection, an image may be taken of, e.g., a robot's workspace and image segmentation may be performed to locate cables in the workspace. However, existing instance segmentation methods, while effective for traditional objects, struggle with cables, more generally DLOs (deformable linear objects) due to their flexible nature. Therefore, segmentation methods are desirable which work well for DLOs (and which are easy to use).

The paper by Alexander Kirillov et al. "Segment Anything", April 2023, http://arxiv.org/abs/2304.02643, in the following referred to as reference [1], describes the segmentation model "Segment Anything Model" (SAM) which adopts prompt-based techniques for segmentation and shows remarkable generalization capabilities across various downstream segmentation tasks, even excelling in segmentation of complex scenarios with objects like DLOs. However, SAM's utility is limited to manual prompts in the form of points, masks, or bounding boxes, with basic, proof-of-concept text prompting.

The paper by Timo Lüddecke et al., "Image Segmentation Using Text and Image Prompts", December 2021, http://arxiv.org/abs/2112.10003, in the following referred to as reference [2], describes the segmentation model "CLIPseg" (CLIP: Contrastive Language-Image Pre-training) which is a text-promptable semantic segmentation model which takes as an input a text prompt and an image and returns the semantic segmentation of the image, with this object in the foreground and everything else in the background. CLIPSeg works well for semantic segmentation tasks, but does not easily extend to instance segmentation.

The paper by Alec Radford et al. "Learning Transferable Visual Models From Natural Language Supervision", February 2021, http://arxiv.org/abs/2103.00020, in the following referred to as reference [3], describes the fusion model CLIP (having a text encoder and an image encoder) which is used by CLIPseg.

According to various embodiments, a method for segmenting an image is provided, comprising receiving a text prompt describing a type of object to be marked in the image, generating, by a text prompt encoder, embeddings of point prompts corresponding to the received text prompt and supplying the embeddings of the point prompts and the image to a segmentation network configured to perform image segmentation from point prompt embeddings.

The method described above allows reliable detection of deformable linear objects (DLOs) by instance segmentation which has wide immense applications in generalizing automated robotic applications. It is text-promptable (and thus easy to use - a user only needs to you only need to provide an (e.g. RGB) image and the text prompt) and is for example based on (i.e. the ML model contains) foundation models for the segmentation network and the text prompt encoder. For example, the pre-trained foundation models - Segment Anything Model (SAM) and CLIPSeg, are used (without the need for fine-tuning them) for the segmentation network (SAM) and the text prompt encoder (including CLIPSeg), respectively.

The method further provides robust generalization to Out-Of-Dataset (OOD) images (i.e. not seen in the training data set). It can be applied to practically any problem that requires the general or specific instance segmentation of DLOs.

In the following, various examples are given.

Example 1 is a method for segmenting an image as described above.

Example 2 is the method of example 1, wherein the type of object is a type of deformable linear object.

In particular for pictures with deformable linear objects (DLOs), which are difficult to segment, the method performs well.

Example 3 is the method of example 1, wherein the type of object is a cable type.

Cables are examples of DLOs which occur in many applications where image segmentation is useful.

Example 4 is the method of any one of examples 1 to 3, comprising supplying an output of the text prompt encoder and an output of the segmentation network to a classifier network configured to classify parts of the image into object and no-object and filtering out components (e.g. mask tokens) having the no-object class from the output of the segmentation network.

This reduces the number of image parts wrongly indicated as containing an object of the object type indicated by the text prompt. The combination of the output of the text prompt encoder and the output of the segmentation network may be done by a cross-attention layer.

Example 5 is the method of any one of examples 1 to 4, further comprising supplying a positional encoding of positions on the image to the text prompt encoder.

This ensures that the text prompt encoder has geometric information about the input image.

Example 6 is the method of any one of examples 1 to 5, wherein the segmentation network is the Segment Anything Model (SAM).

The SAM provides good segmentation results, also for DLOs, for point prompts.

Example 7 is the method of any one of examples 1 to 6, wherein the text prompt encoder comprises a CLIPseg encoder followed by a prompt encoder network operating an attention heatmap generated by the CLIPseg encoder from the text prompt.

CLIPseg provides the possibility of text prompting for segmentations tasks. By generating embeddings of point prompts this may be combined with a segmentation model working well for point prompts (such as SAM).

Example 8 is a method for controlling a robot device comprising taking an image of an environment of the robot device, segmenting the image according to the method of any one of examples 1 to 7 and controlling the robot device according to a result of the image segmentation (e.g. to manipulate (such as grasp) an object whose location is indicated in the image segmentation result).

Example 9 is a data processing device (e.g. robot device controller) , configured to perform a method of any one of examples 1 to 8.

Example 10 is a computer program comprising instructions which, when executed by a computer, makes the computer perform a method according to any one of examples 1 to 8.

Example 11 is a computer-readable medium comprising instructions which, when executed by a computer, makes the computer perform a method according to any one of examples 1 to 8.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a control scenario according to an embodiment.
- Figure 2: shows a machine learning model according to an embodiment.
- Figure 3: shows a prompt encoder network, a classifier network and their relation in a machine learning model according to an embodiment.
- Figure 4: shows a flow diagram illustrating a method for segmenting an image.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

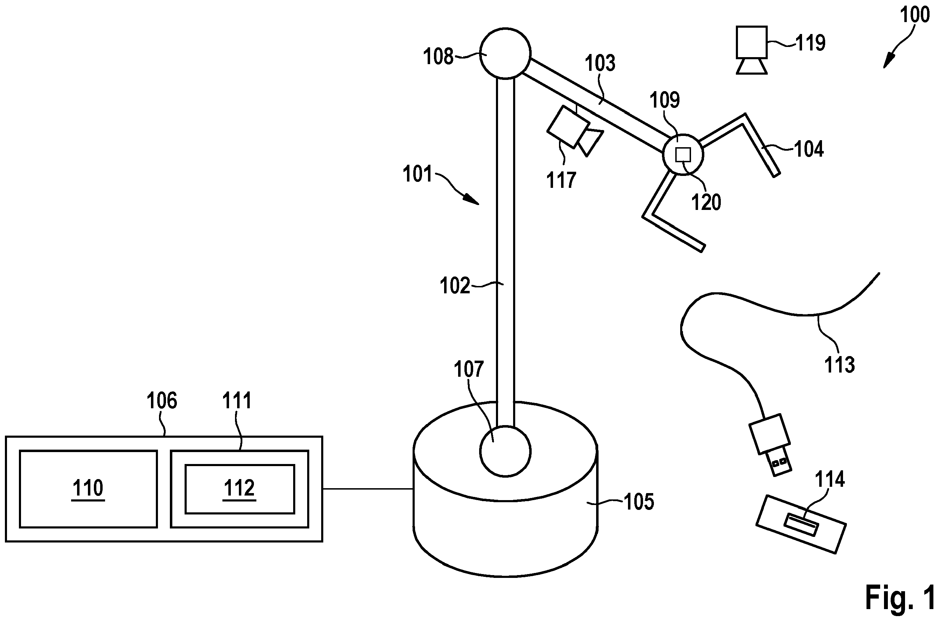

Figure 1 shows a robot 100.

The robot 100 includes a robot arm 101, for example an industrial robot arm for handling or assembling a work piece (or one or more other objects). The robot arm 101 includes manipulators 102, 103, 104 and a base (or support) 105 by which the manipulators 102, 103, 104 are supported. The term "manipulator" refers to the movable members of the robot arm 101, the actuation of which enables physical interaction with the environment, e.g. to carry out a task. For control, the robot 100 includes a (robot) controller 106 configured to implement the interaction with the environment according to a control program. The last member 104 (furthest from the support 105) of the manipulators 102, 103, 104 is also referred to as the end-effector 104 and includes a grasping tool (which may also be a suction gripper).

The other manipulators 102, 103 (closer to the support 105) may form a positioning device such that, together with the end-effector 104, the robot arm 101 with the end-effector 104 at its end is provided. The robot arm 101 is a mechanical arm that can provide similar functions as a human arm.

The robot arm 101 may include joint elements 107, 108, 109 interconnecting the manipulators 102, 103, 104 with each other and with the support 105. A joint element 107, 108, 109 may have one or more joints, each of which may provide rotatable motion (i.e. rotational motion) and/or translatory motion (i.e. displacement) to associated manipulators relative to each other. The movement of the manipulators 102, 103, 104 may be initiated by means of actuators controlled by the controller 106.

The term "actuator" may be understood as a component adapted to affect a mechanism or process in response to be driven. The actuator can implement instructions issued by the controller 106 (the so-called activation) into mechanical movements. The actuator, e.g. an electromechanical converter, may be configured to convert electrical energy into mechanical energy in response to driving.

The term "controller" may be understood as any type of logic implementing entity, which may include, for example, a circuit and/or a processor capable of executing software stored in a storage medium, firmware, or a combination thereof, and which can issue instructions, e.g. to an actuator in the present example. The controller may be configured, for example, by program code (e.g., software) to control the operation of a system, a robot in the present example.

In the present example, the controller 106 includes one or more processors 110 and a memory 111 storing code and data based on which the processor 110 controls the robot arm 101. According to various embodiments, the controller 106 controls the robot arm 101 on the basis of a machine learning model (e.g. including one or more neural networks) 112 stored in the memory 111. This machine learning model may process sensor data such as provided by cameras 117, 119. The controller 106 may also take into account other sensor data e.g. from a force sensor 120.

For example, the robot 100 is applied in robotic assembly process automation. The sequential process of automated robotic assembly can be divided into four broad subtasks - detection, reaching, grasping and insertion. For example, the robot's task is to detect an object 113 (such as a cable 113 with a plug for assembly of an electronic device), reach for it, grasp it and arrange it such that the plug can be inserted into a socket 114 (e.g. as a subsequent step).

According to various embodiments, a robust and user-friendly solution to the first one of these subtasks, detection, is provided, in particular for detection of dynamic linear objects (DLOs) such as a cable 113.

According to various embodiments, the functionality is provided to allow a user to specify, using a text prompt (which the user may for example input via a keyboard and screen of the controller 106 or a computer connected to it), which DLO 113 the user wants the robot to reach for in order to perform a downstream task such as grasping and/or inserting (e.g. into socket 114). This for example allows an assembly line operator to specify an assembly process as a series of text prompts, allowing for easy context switching and process generalization.

To provide this functionality, according to various embodiments, the machine-learning (ML) model 112 is based on two foundation models (SAM and CLIPseg in the following examples) one for segmentation from point prompt embeddings and the other for generating the point prompt embeddings from text prompts. Further, the ML model 112 comprises two attention-based networks as adapter - one for generating the point prompt embeddings for the second foundation model's (e.g. CLIPseg's) output such that that they can directly be input into the first foundation model's decoder (e.g. SAM's mask decoder) and the other (optionally) for filtering out the duplicate and low quality masks generated by the first foundation model (e.g. SAM).

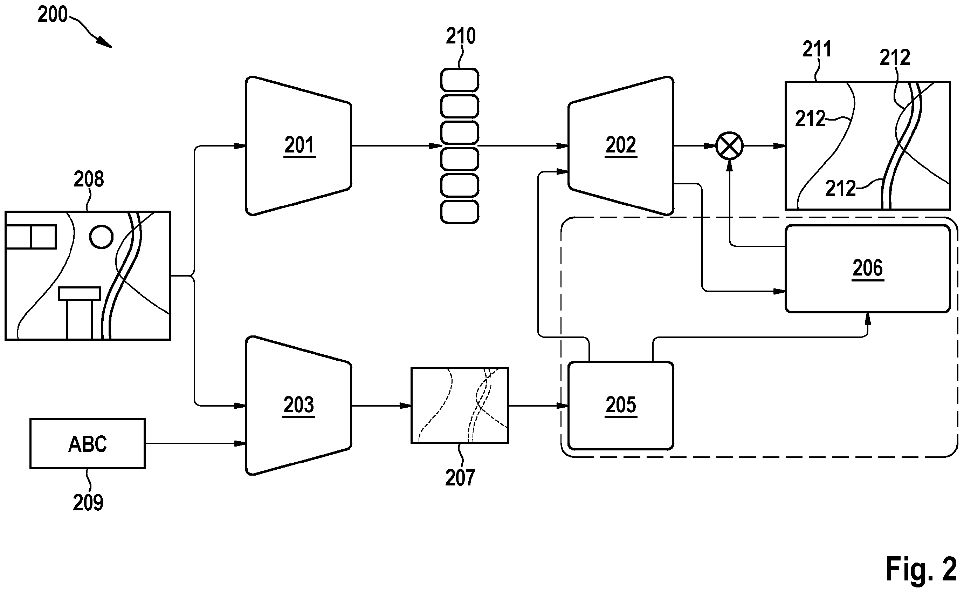

Figure 2 shows a machine learning model 200 according to an embodiment.

The machine learning model 200 comprises a SAM (Segment Anything Model) encoder 201 (i.e. SAM image encoder, see reference [1]), receiving an input image 209 to be segmented and a SAM decoder 202 (i.e. mask decoder, also see reference [1]) receiving the embedding 210 of the input image 209 generated by the SAM encoder 201 as well as point prompt embeddings.

The machine learning model 200 further comprises a CLIPseg encoder 203. The CLIPseg encoder 203 comprises a CLIP (Contrastive Language-Image Pre-Training) text transformer encoding a text prompt 208 and a CLIP visual transformer (which is a sequence of transformers), and a FiLM (Feature-wise Linear Modulation) layer combining the results of both, see reference [2] and [3]. In other words, the CLI Pseg encoder 203 corresponds to the CLI Pseg model of reference [2] (for using a text prompt, not a visual prompt) up to (and including) the FiLM layer. The output of the FiLM layer (and thus of the CLIPseg encoder 203) is an "attention heatmap" which includes an attention value for each of a plurality of patches of the input image 209 (which is the query image for the CLIPseg encoder 203). Illustratively speaking, the heatmap 207 specifies which parts of the image 208 should be paid attention to (i.e. focused on) to find objects as specified by the text prompt 209.

The machine learning model 200 further comprises an adapter (or adapter model) 204 that facilitates as a communication channel between the CLIPSeg model (i.e. CLIPSeg encoder 203) and SAM (i.e. specifically the SAM decoder 202). Specifically, the adapter 204 is capable of transforming semantic mask information corresponding to a text prompt (as output by the CLIPSeg encoder 203 in the form of the heatmap 207) to batches of point prompt embeddings (i.e. point prompt embedding vectors) for the SAM decoder 202 which processes them to generate (e.g. one-shot) instance segmentation masks for the input image 209.

According to various embodiments, the adapter 204 consists of two neural networks 205, 206:
1. Prompt encoder network 205: this neural network extracts batches of point prompts from CLIPSeg's embedding space i.e. the heatmap 207. It can be controlled using two hyperparameters: N (the number of prompt batches) and Np (the number of points in each batch).
2. Classifier network 206: this is a binary classifier network that labels whether a particular mask from the generated N masks should appear in the final instance segmentation.

While manually inputting multiple points per cable proves inefficient for process automation in an industrial context, because it necessitates human intervention, the architecture of figure 1 allows harnessing the capabilities of the SAM model for segmentation and its ability to cooperate with point prompts. However, according to various embodiments, SAM's prompt encoder is replaced by the CLIPSeg encoder 203 followed by the prompt encoder network 205 to convert text prompts 208 into point prompt embeddings. Moreover, the ML model 200 performs instance segmentation in one forward pass without the need for sequential mask refinement. The output of the classifier network 206 serves to filter out duplicate and low-quality masks.

CLIPSeg leverages a CLIP backbone followed by a FiLM layer (as encoder) and a UNet inspired decoder to generate semantic segmentation based on text prompts. As mentioned above, CLIPseg encoder's FiLM layer's embedding space represents a spatially-oriented attention heatmap 207 corresponding to the text prompt 208. The heatmap 207 is the input for the prompt encoder network 205.

In the following, the prompt encoder network 205 and the classifier network 206 are described in more detail.

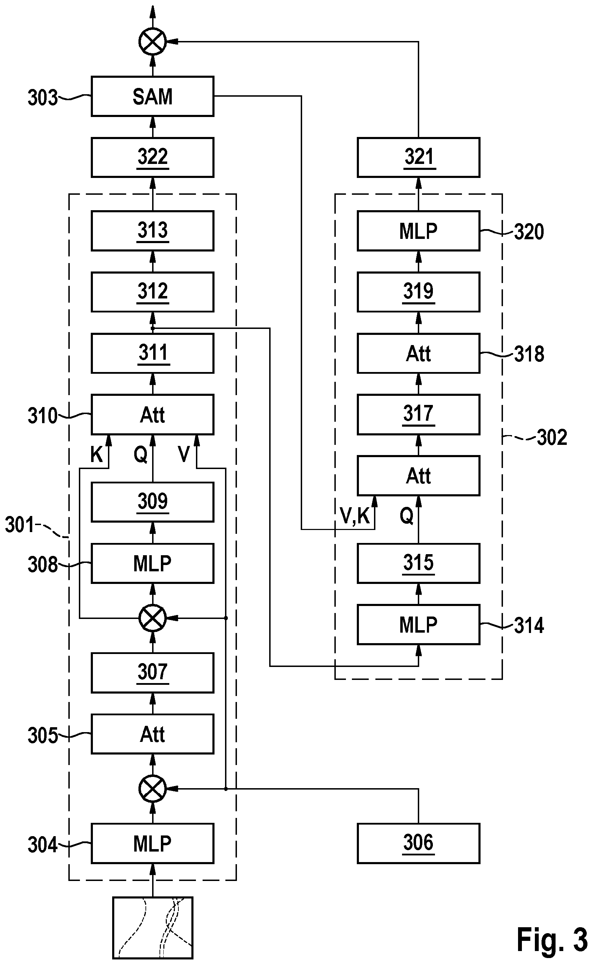

Figure 3 shows the prompt encoder network 301, the classifier network 302 and their relation to the SAM decoder 303 in more detail.

The objective of the prompt encoder network 205, 301 is to efficiently convert the elements in the embedding space generated by CLIPSeg (i.e. the heatmap 207) into batches of point prompt embeddings that the SAM decoder 202, 303 can accurately decipher. This process of selecting the appropriate point prompts relies on the following objectives:
1. Identification of critical patches in the input image 209.
2. Determining an optimal threshold based on patch importance and filtering out the rest.
3. Categorizing each selected point as foreground, background, or no-point to leverage SAM's capabilities.

The CLIPSeg encoder 203 generates the heatmap 207, which is for example an embedding tensor which has an attention value for each of 64 image patches of size 22x22 pixels , for each patch heat value, later on upsampled to 256 patches which SAM works with), which represents the attention heatmap 207 that aligns with the input image 209 spatially and is conditioned on the text prompt 208. To maintain a consistent embedding size throughout the pipeline, a first MLP (multilayer perceptron) 304 is used to upscale the 64-dimensional embedding (heatmap 207 with 64 patches) to 256 dimensions (i.e. values for 256 patches on which SAM works). This is followed by a first self-attention layer 305 which focuses on the relevant patches while incorporating information from CLIPSeg's embedding output (i.e. the heatmap 207 processed by the first MPL 304) enhanced with a Dense Positional Encoding (DPE) 306 (e.g. similar to positional encodings as used in SAM, see reference [1]).

The output of the first self attention layer 305 (which can be seen as self-attended patches) is fed to a first layer normalization 307. To maintain awareness of positional information at this stage, the DPE information (i.e. dense positional encoding) 306 is incorporated into the output of the first layer normalization 307 (i.e. are added to the embedding vector after participating in the self-attention layer to ensure access to crucial geometric information, the positional encoding values 306). The result of this incorporation (i.e. addition) is used as keys for a sampler attention block 310 as well as fed to a second MLP 308 (having a ReLU activation function that filters out unimportant patches) whose output (normalized by a second layer normalization 309) are used as queries for the sampler attention block 310. The dense positional encoding (i.e. DPE tensor) is used as values for the sampler attention block 310. The processing of the sampler attention block 310 can be seen to resemble a Lookup Table (LUT), where the interaction of the keys and queries determines the positional encoding vector to select from the DPE.

SAM performs an affine transformation on the positional encodings to embed label information of whether the point represents foreground, background, or no-point. The final linear layer 312 following the sampler attention block 310 via a third layer normalization 311 mimics this labelling process and is followed by a fourth layer normalization 313 whose output 322 is the prompt encoder's point prompt embedding output 322 which is reshaped to the dimensions N ×Np ×256, where N represents the number of masks per text prompt 208, Np signifies the number of points per text prompt 208, and 256 is the point prompt embedding size (i.e. vector length), and then fed to the SAM decoder 303.

At the output of the sampler attention block 310, the point queries (i.e. the queries used by the sampler attention block 310) are added to the results of the sampler attention block 310 (this is not shown in figure 3). This reintroduction of the original prompt tokens, including their positional encoding, into the updated tokens allows for a strong dependence on both the queries that carry the heatmap information and the values that carry the geometric information.

According to various embodiments, the DPE 306 takes (like in SAM) inspiration from Fourier features and classical techniques from digital communication utilizing a randomly initialized frequency matrix. Specifically, according to various embodiments, the DPE 306 is calculated using the identical frequency matrix. This ensures that every element within each vector of the DPE 306 conveys consistent information, aligning with what the SAM decoder 303 has been trained to interpret.

The classifier network 302 is a binary classifier network for the purpose of filtering out duplicate or erroneous masks during prediction (using an additional "no-object" class).

This classifier network 302 (binary classifier model) is composed of a third MLP (e.g. a linear layer) 314, followed by a fifth layer normalization 315, a cross-attention layer 316, followed by a sixth layer normalization 317 and a followed by second self-attention layer 318 which is followed by a seventh layer normalization 319 and a fourth MLP 320 whose output 321 is the output 321 of the classifier network 302. This output 321 (classification into objects and no-objects) is multiplied with the output of the SAM decoder 202, 303 such that its output is a mask 211 for the input image comprises a sub-mask for each object (i.e. instance) of the object type specified by the text prompt 208 (e.g. a sub-mask for each cable).

The cross-attention layer 316 operates on the mask tokens produced by the SAM decoder 303 (as values and keys), which encapsulate sub-mask-related details, and queries generated by the third MLP 314, normalized by the fifth layer normalization 315, from the output of the third layer normalization 311 of the prompt encoder network 301, encompassing text-related information. This interaction results in an embedding (classifier tokens) that distils both types of information for each generated sub-mask.

Similarly as for the sampler attention block 310, at the output of the cross-attention layer 316, these queries (i.e. the queries used by the attention layer 316) are added to the results of the attention layer 316 (again, this is not shown in figure 3). So, textual information is reintroduced into to the classifier tokens. These classifier tokens then undergo the second self-attention layer 318 followed by the fourth MLP 320 to yield binary classifications as the output 321.

According to various embodiments, the machine-learning model 200 accepts a single RGB image 209 and a text prompt 208 as input, delivering an instance segmentation mask for each DLO in the image.

As training data, a synthetically generated CAD dataset with annotations may be used. For example, a constant, general text prompt is provided during the training procedure (like "cables" or "wires") to obtain instance segmentation masks for all the cables in an image.

A bipartite matching algorithm is for example used to establish the optimal correspondence between the generated sub-masks and ground-truth sub-masks, to train the prompt encoder network 205. As loss function, a combination of the focal loss and dice loss is for example used, e.g. in the ratio of 20:1. The binary classification labels are for example extracted from the output of the bipartite matching algorithm. If a mask successfully matches, then it is labelled as 1, else, it is labelled as 0. A binary cross-entropy loss is for example used to train the classifier network 206. To balance the distribution of 0s and 1s in the dataset, a weight for positive labels (e.g. set to 3) may be used. Our training procedure employs a learning rate warm-up spanning 5 epochs, followed by a cosine decay.

For example, a peak learning rate is set to lᵣ = 0.0008 and the default AdamW optimizer with a weight decay of 0.01 is used. Throughout the training, the weights and biases of both foundational models SAM (i.e. the SAM encoder 201 and the SAM decoder 202) and CLIPSeg (i.e. the CLIPseg encoder 203) are for example fixed. For example, for SAM, the ViT-U16-based model is used, while for CLIPSeg the ViT-B/16-based model is used (see references [1] and [2]).

The most time-consuming process in SAM is the generation of the image embedding 210. Once the image embedding 210 is generated, it can be prompted multiple times (using multiple text prompts 209) to obtain as many sub-masks as necessary. This prompting process is much faster and can be performed one-shot. To optimize training speed this way, a training batch size of 1 may be used which allows creating batches of text prompts 209 with each DLO in the scene corresponding to a separate batch. For example, for each image 209, a maximum of N = 11 text prompts 208 is set and the number of points within each prompt is set to Np = 3.

For example, throughout the training phase, the text prompt 208 remains constant as "cables," with the aim of obtaining instance segmentation for all the cables within the image 209. During training augmentations applied to the training input images may be conducted. These augmentations for example encompass random greyscale conversion, colour jitter, and patch-based and global Gaussian blurring and noise.

During application of the machine learning model 200, it can be prompted using a specific text prompt 208 (like "black USB cable" or "blue Ethernet cable") to obtain the instance segmentation mask of that specific type of cable in the respective input image 209. The machine learning model 200 may thus for example be used to generalize and automate the task of robotic assembly using a test-prompted process description.

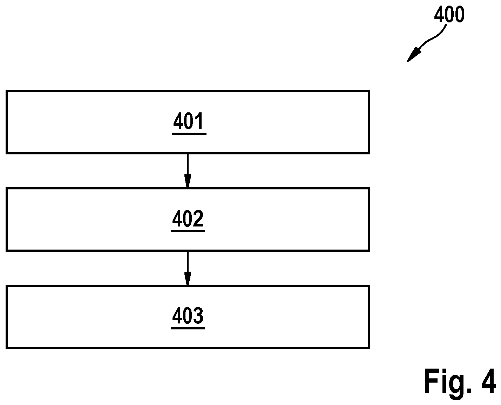

In summary, according to various embodiments, a method is provided as illustrated in figure 4.

Figure 4 shows a flow diagram 400 illustrating a method for segmenting an image (e.g. mark objects to be detected as foreground, rest as background).

In 401, a text prompt is received (e.g. via a human machine interface, e.g. input by a user via a keyboard) describing a type of object to be marked in the image (i.e. a mask for the image should be generated which includes a sub-mask for each instance of the object type in the image).

In 402, a text prompt encoder (e.g. CLIPseg encoder followed by prompt encoder network) generates embeddings of point prompts corresponding to the received text prompt (i.e. text prompt encoder generates embeddings of point prompts, i.e. of points indicating pixels belonging to objects of the object type specified by the text prompt in the image).

In 403 the embeddings of the point prompts and the image are supplied to a segmentation network (e.g. SAM, specifically supplying the image to the SAM encoder and the point prompt embeddings to the SAM decoder which also receives the SAM encoder's output (i.e. encoded version of the image)) configured to perform image segmentation from point prompt embeddings.

The segmentation result of the method of figure 4 can be used to compute a control signal for controlling a technical system, in particular a robot device like e.g. a computer-controlled machine, like a robot, a vehicle, a domestic appliance, a power tool, a manufacturing machine, a personal assistant or an access control system. According to various embodiments, an image of the robot device's environment (e.g. robot workspace) is taken and segmented (e.g. to detect one or more objects to be manipulated) and then the robot device may be operated accordingly. For example, when cables have been detected in input images, a robot arm may be controlled to grasp one of the cables.

Various embodiments may receive and use image data (i.e. digital images) from various visual sensors (cameras) such as video, radar, LiDAR, ultrasonic, thermal imaging, motion, sonar etc., as input images.

The method of Figure 4 may be performed by one or more data processing devices (e.g. computers or microcontrollers) having one or more data processing units. The term "data processing unit" may be understood to mean any type of entity that enables the processing of data or signals. For example, the data or signals may be handled according to at least one (i.e., one or more than one) specific function performed by the data processing unit. A data processing unit may include or be formed from an analogue circuit, a digital circuit, a logic circuit, a microprocessor, a microcontroller, a central processing unit (CPU), a graphics processing unit (GPU), a digital signal processor (DSP), a field programmable gate array (FPGA), or any combination thereof. Any other means for implementing the respective functions described in more detail herein may also be understood to include a data processing unit or logic circuitry. One or more of the method steps described in more detail herein may be performed (e.g., implemented) by a data processing unit through one or more specific functions performed by the data processing unit.

Accordingly, according to one embodiment, the method is computer-implemented.

## Claims

1. A method for segmenting an image (209), comprising:
receiving (401) a text prompt (208) describing a type of object (113) to be marked in the image (209);
generating (402), by a text prompt encoder (203, 205), embeddings of point prompts (322) corresponding to the received text prompt (208); and
supplying (403) the embeddings of the point prompts (322) and the image (209) to a segmentation network (201, 202) configured to perform image segmentation from point prompt embeddings.

2. The method of claim 1, wherein the type of object (113) is a type of deformable linear object (113).

3. The method of claim 1, wherein the type of object (113) is a cable type.

4. The method of any one of claims 1 to 3, comprising supplying an output of the text prompt encoder (203, 205) and an output of the segmentation network (201, 202) to a classifier network (206, 302) configured to classify parts of the image (209) into object and no-object and filtering out components having the no-object class from the output of the segmentation network (201, 202).

5. The method of any one of claims 1 to 4, further comprising supplying a positional encoding of positions on the image (209) to the text prompt encoder (203, 205).

6. The method of any one of claims 1 to 5, wherein the segmentation network (201, 202) is the Segment Anything Model.

7. The method of any one of claims 1 to 6, wherein the text prompt encoder (203, 205) comprises a CLIPseg encoder (203) followed by a prompt encoder network (205, 301) operating an attention heatmap (207) generated by the CLIPseg encoder from the text prompt (208).

8. A method for controlling a robot device (101) comprising:
taking an image (209) of an environment of the robot device (101);
Segmenting the image (209) according to the method of any one of claims 1 to 7; and
controlling the robot device (101) according to a result of the image segmentation.

9. A data processing device, configured to perform a method of any one of claims 1 to 8.

10. A computer program comprising instructions which, when executed by a computer, makes the computer perform a method according to any one of claims 1 to 8.

11. A computer-readable medium comprising instructions which, when executed by a computer, makes the computer perform a method according to any one of claims 1 to 8.

## Amended claims

### Amended claims in accordance with Rule 137(2) EPC.

1. A method for segmenting an image (209), comprising:
receiving (401) a text prompt (208) describing a type of object (113) to be marked in the image (209);
generating (402), by a text prompt encoder (203, 205), embeddings of point prompts (322) corresponding to the received text prompt (208), wherein the text prompt encoder (203, 205) comprises a CLIPseg encoder (203) followed by a prompt encoder network (205, 301) operating an attention heatmap (207) generated by the CLIPseg encoder from the text prompt (208).; and
supplying (403) the embeddings of the point prompts (322) and the image (209) to a segmentation network (201, 202) configured to perform image segmentation from point prompt embeddings, wherein the segmentation network (201, 202) is a Segment Anything Model, and supplying an output of the text prompt encoder (203, 205) and an output of the segmentation network (201, 202) to a classifier network (206, 302) configured to classify parts of the image (209) into object and no-object and filtering out components having the no-object class from the output of the segmentation network (201, 202) and supplying a positional encoding of positions on the image (209) to the text prompt encoder (203, 205)..

2. The method of claim 1, wherein the type of object (113) is a type of deformable linear object (113).

3. The method of claim 1, wherein the type of object (113) is a cable type.

4. A method for controlling a robot device (101) comprising:
taking an image (209) of an environment of the robot device (101);
Segmenting the image (209) according to the method of any one of claims 1 to 3; and
controlling the robot device (101) according to a result of the image segmentation.

5. A data processing device, configured to perform a method of any one of claims 1 to 4.

6. A computer program comprising instructions which, when executed by a computer, makes the computer perform a method according to any one of claims 1 to 4.

7. A computer-readable medium comprising instructions which, when executed by a computer, makes the computer perform a method according to any one of claims 1 to 4.
